(19) **Europäisches Patentamt**

**European Patent Office**

**Office européen des brevets**

(11) **EP 1 428 110 B1**

(12) **EUROPÄISCHE PATENTSCHRIFT**

(45) Veröffentlichungstag und Bekanntmachung des Hinweises auf die Patenterteilung:
**09.03.2005 Patentblatt 2005/10**

(21) Anmeldenummer: 02799410.2

(22) Anmeldetag: **18.09.2002**

(51) Int Cl.⁷: **G06F 3/033**

(86) Internationale Anmeldenummer:
**PCT/EP2002/010477**

(87) Internationale Veröffentlichungsnummer:
**WO 2003/027821 (03.04.2003 Gazette 2003/14)**

(54) **3D-EINGABEGERÄT MIT INTEGRIERTEM TOUCHSCREEN**

THREE-DIMENSIONAL INTEGRATED TOUCH SCREEN INPUT APPARATUS

APPAREIL D'ENTREE 3D A ECRAN TACTILE INTEGRE

(84) Benannte Vertragsstaaten:
**CH FR GB IT LI**

(30) Priorität: **21.09.2001 DE 10146471**

(43) Veröffentlichungstag der Anmeldung:
**16.06.2004 Patentblatt 2004/25**

(60) Teilanmeldung:
**04028345.9**

(73) Patentinhaber: **3Dconnexion GmbH**
**82229 Seefeld (DE)**

(72) Erfinder:
- **GOMBERT, Bernd**
  **82229 Seefeld (DE)**
- **VON PRITTWITZ, Bernhard**
  **82229 Seefeld (DE)**

(74) Vertreter: **Rupp, Christian, Dipl.Phys.**
**Mitscherlich & Partner**
**Patent- und Rechtsanwälte**
**Sonnenstrasse 33**
**80331 München (DE)**

(56) Entgegenhaltungen:
**EP-A- 0 979 990**     **WO-A-96/01977**
**US-A- 5 995 104**

**Beschreibung**

Die Erfindung bezieht sich auf ein in drei Dimensionen bewegliches, von Hand zu bedienendes Eingabe- und Steuergerät. Insbesondere bezieht sich die vorliegende Erfindung auf eine in eine Basisplatte des Eingabegeräts integrierte Anzeigevorrichtung mit Touchscreen, mit dessen Hilfe sich bspw. die Grundeinstellungen des Eingabegeräts, wie Belegungen auslösbarer Funktionen und/oder die Empfindlichkeit des Eingabegeräts bei Translations- bzw. Rotationsbewegungen des Eingabegeräts, individuell verändern lassen.

Da die zugrunde liegende Erfindung vorteilhaft im Bereich der Steuerung virtueller und/oder realer Objekte eingesetzt werden kann, soll im Folgenden auf die nach dem heutigen Stand der Technik gebräuchlichen Hilfsmittel zur Eingabe von Information, die zur Steuerung von Objekten im Bereich von Virtual Reality (VR)-Applikationen eingesetzt werden, kurz eingegangen werden. Anwendungsfälle für reale Objekte sind bspw. Roboter oder aber auch Elektro- bzw. Elektronikgeräte im Haushalt, wenn das 3D-Eingabegerät in der Art einer Fernbedienung verwendet wird. Weitere Anwendungsfälle gibt es bspw. im Automobilbereich (Verstellung elektrischer Sitze, Aussenspiegel).

Herkömmliche Eingabesysteme wie Tastaturen, Mäuse, Trackballs und Joysticks sind heute weit verbreitet. Sie werden verwendet, um Positionsmarken (engl.: "Cursors"), Mauszeiger etc. zu steuern, um beispielsweise durch eine virtuelle Szene navigieren zu können oder virtuelle Objekte auf dem Bildschirm bzw. reale Objekte zu bewegen.

Mit einem Touchscreen ist es möglich, direkt auf Objekte, die auf dem Bildschirm abgebildet sind, mit dem Finger zu zeigen, ohne weitere platzraubende Zusatzgeräte auf dem Schreibtisch zu benötigen. Niedrig auflösende Touchscreens weisen 10 bis 50 Positionen in waagerechter und senkrechter Richtung auf und benutzen eine horizontale und vertikale Reihe von Infrarot-Leuchtdioden und Fotosensoren, um ein Gitter von unsichtbaren Lichtstrahlen unmittelbar vor dem Bildschirm aufzubauen. Bei einer Berührung des Bildschirms werden sowohl vertikale als auch horizontale Lichtstrahlen unterbrochen. Ausgehend von dieser Information, kann die aktuelle Fingerposition ermittelt werden.

Eine andere bekannte Ausführungsform berührungssensitiver Informationseingabegeräte ist das kapazitiv gekoppelte Touch-Panel. Dieses liefert eine Auflösung von ca. 100 Positionen in jeder Richtung. Wenn ein Benutzer die leitfähig beschichtete Glasplatte des Touch-Panels mit einem Finger berührt, kann aufgrund der Impedanzänderung die aktuelle Fingerposition ermittelt werden. Andere hochauflösende Panels verwenden zwei minimal voneinander entfernte, transparente Schichten. Eine davon ist leitfähig beschichtet, die andere mit einem Widerstandsmaterial beschichtet. Durch den Anpressdruck des Fingers berühren sich diese beiden Lagen und durch Messung des daraus resultierenden Spannungsabfalls kann dann die aktuelle Fingerposition ermittelt werden. Eine niedriger auflösende und billigere Variante dieser Technologie verwendet anstelle dieser Schichten ein Gitter von feinen Drähten.

Nach dem Stand der Technik sind heute verschiedene Lösungen für das Problem der Echtzeit-Bewegungssteuerung virtueller Objekte verfügbar, wobei jede dieser Lösungen für einen speziellen Anwendungszweck optimiert ist. Mit jeder dieser Lösungen sind daher bestimmte Einschränkungen verbunden. Um einige der wichtigsten dieser Lösungen ansatzweise erklären zu können, ist es notwendig, kurz auf ihre wichtigsten Merkmale einzugehen.

Eine Möglichkeit zur Echtzeit-Bewegungssteuerung virtueller Objekte hat sich in letzter Zeit durch die Entwicklung von Eingabegeräten für Computer ergeben, die die gleichzeitige Eingabe von Ansteuersignalen mehrerer, voneinander unabhängiger Freiheitsgrade ermöglichen. Die dadurch geschaffenen Möglichkeiten übersteigen bei weitem diejenigen, die beispielsweise bei der Verwendung einer Maus bestehen, die lediglich zweidimensional (z.B. auf der Ablagefläche eines Schreibtischs) gesteuert werden kann. Zwar ist es auch bekannt, eine Maus beispielsweise mit zusätzlichen Schaltern zu versehen, indessen haben diese Schalter den Nachteil, dass sie nicht die Eingabe von Analogdaten ermöglichen, sondern vielmehr auf Binärdaten (Ein/Aus) beschränkt sind.

Aus dem Stand der Technik sind auch verschiedene Eingabegeräte bekannt, die analoge Ansteuersignale mit verschiedenen, voneinander unabhängigen Freiheitsgraden erzeugen können, wobei jedes dieser Analogsignale somit als Parameterwert bei einer Steuerung virtueller Objekte verwendet werden kann. Derartige manuell steuerbare Eingabesysteme, die eine Navigation in drei Dimensionen erlauben, werden heute in einer Reihe der unterschiedlichsten technischen Anwendungsfelder erfolgreich eingesetzt.

Beispielsweise ist aus der Patentschrift US-A-5,757,360 ein eiförmiges Eingabegerät für Computer bekannt, das durch eine Hand des Benutzers frei im Raum bewegt werden kann, seine momentanen Positionen, Bewegungsrichtungen, Geschwindigkeiten und Beschleunigungen ermittelt und diese kinematischen Daten drahtlos zu einem Computer überträgt. Dabei wird ein analoger Bewegungsablauf in Form eines Bewegungsmusters identifiziert, woraus Bewegungsbefehle abgeleitet und in eine animierte Grafikdarstellung umgesetzt werden. Die Bewegungsmuster werden mit Hilfe eines Mustererkennungsalgorithmus automatisch erkannt. Zusätzlich werden Steuerbefehle erzeugt. Der Nachteil dieses Verfahrens besteht darin, dass es nicht frei spezifizierbar ist, da Bewegungsabläufe des Benutzers, die durch das Eingabegerät analog erfasst werden, korrespondierenden Bewegungsabläufen von gespeicherten Bewegungssequenzen einer animierten Grafikdarstellung zugeordnet werden und nur als solche dargestellt werden können.

Eingabegeräte, die über manuell zu betätigende Kraft-Momenten-Sensoren verfügen, sind beispielsweise aus den Patentschriften DE 36 11 336 C2, DE 37 64 287 sowie EP 0 979 990 A2 bekannt.

Aus der zuletzt genannten europäischen Patentschrift EP 0 979 990 A2 ist bekannt, einen derartigen Kraft-Momenten-Sensor zum Steuern von Bedienelementen eines realen oder virtuellen Misch- bzw. Steuerpults zu verwenden, beispielsweise um neuartige Farb-, Licht- und/oder Tonkompositionen zu kreieren und zu gestalten. Hierbei kann in vorteilhafter Weise die intuitive räumliche Steuerung in drei translatorischen sowie drei rotatorischen Freiheitsgraden auf ein stufenloses räumliches Mischen oder Steuern einer großen Anzahl von optischen und/oder akustischen Parametern übertragen werden. Zur Steuerung wird auf die Bedienoberfläche des Eingabegeräts ein Druck ausgeübt und dadurch ein Impuls erzeugt, der mit Hilfe des Kraft-Momenten-Sensors erfasst und in ein aus einem Kraft- und einem Momentenvektor bestehendes Vektorpaar umgesetzt wird. Werden dabei bestimmte charakteristische Impulsvorgaben erfüllt, kann beispielsweise eine objektspezifische Steueroperation und/oder eine technische Funktion durch Schalten in einen Aktivierungszustand ausgelöst bzw. durch Schalten in einen Deaktivierungszustand wieder beendet werden.

Aus dieser Druckschrift ist weiterhin bekannt, den besagten Kraft-Momenten-Sensor als Bedienelement eines 3D-Eingabegeräts seitlich an einem Touchscreen anzubringen, so dass die Längsachse des Bedienelements parallel zu der Anzeige- und Bedienfläche des Touchscreens liegt. Damit ist jedoch der Nachteil verbunden, das die Blickrichtung auf den Touchscreen nicht mit der Längsachse des Bedienelements zusammmenfällt. Das hat zur Folge, dass die Hand-Augen-Koordination des Benutzers erschwert wird, da die Richtungen von Steuerbewegungen des Bedienelements und angezeigten Objektbewegungen auf dem Bildschirm bei ungünstiger Achsenbelegung des Bedienelements nicht übereinstimmen.

Aus der G 298 04 023 ist ein halbkugelförmiges Eingabegerät mit Drucktasten zur Ansteuerung von Synthesizern oder MIDI-Controllern bekannt.

Dokument US-A-5995104 beschreibt ein drei Dimensionen bewegliches Eingabe- und Steuergerät, das ein Bedienteil mit einem Touchscreen aufweist.

**AUFGABE DER VORLIEGENDEN ERFINDUNG**

Ausgehend von dem oben genannten Stand der Technik, widmet sich die vorliegende Erfindung der Aufgabe, ein komfortables programmierbares Eingabegerät bereitzustellen, mit dessen Hilfe dem Anwender eine interaktive, intuitive Bewegungssteuerung virtueller Objekte in Echtzeit ermöglicht und gleichzeitig die Koordination von Hand und Augen verbessert wird. Insbesondere soll die Programmierung dieses Eingabegeräts vereinfacht werden, ohne dass eine Progammierung über Menüs eines computergesteuerten Konfigurationsprogramms nötig ist.

Diese Aufgabe wird erfindungsgemäß durch die Merkmale der unabhängigen Ansprüche gelöst. Vorteilhafte Ausführungsbeispiele, die den Gedanken der Erfindung weiterbilden, sind in den abhängigen Ansprüchen definiert.

ZUSAMMENFASSENDE DARSTELLUNG DER VORLIEGENDEN ERFINDUNG

Im Rahmen der zugrunde liegenden Erfindung wird die Mensch-Maschine-Schnittstelle durch ein 3D-Eingabegerät repräsentiert. Es ist anzumerken, dass dieses 3D-Eingabegerät nur ein Beispiel für ein Eingabegerät zur Erzeugung von Ansteuersignalen darstellt. Grundsätzlich ist jede andere Art von Eingabegerät ebenfalls geeignet. Das erfindungsgemäße 3D-Eingabegerät weist jedoch den großen Vorteil auf, dass die Eingabe von Ansteuersignalen mit unterschiedlichen Freiheitsgraden in besonders intuitiver Weise erfolgen kann.

Nach dem bevorzugten ersten Ausführungsbeispiel der zugrunde liegenden Erfindung ist ein 3D-Eingabegerät zur Übertragung von Ansteuerdaten zu elektronischen oder elektrischen Geräten vorgesehen. Dieses 3D-Eingabegerät verfügt erfindungsgemäß über

- ein Bedienteil, das derart ausgebildet ist, dass es mittelbar oder unmittelbar durch wenigstens einen Finger oder eine Hand des Benutzers manipulierbar ist,
- eine Basisplatte, bezüglich der das Bedienteil beweglich gelagert ist und

eine Anzeigevorrichtung mit einem Touchscreen. Die Relativbewegung zwischen Bedienteil und Basisplatte wird zur Erzeugung der Ansteuerdaten ausgewertet. Der Touchscreen ist dabei in die Oberseite der Basisplatte integriert, was eine kompakte und benutzerfreundliche Anordnung darstellt.

Gemäß einem zweiten Ausführungsbeispiel der zugrunde liegenden Erfindung ist ein 3D-Eingabegerät zur Übertragung von Ansteuerdaten zu elektronischen oder elektrischen Geräten vorgesehen, das die folgenden Komponenten aufweist:

- ein Bedienteil, das derart ausgebildet ist, dass es mittelbar oder unmittelbar durch wenigstens einen Finger oder mit einer Hand des Benutzers manipulierbar ist,

- eine Basisplatte, bezüglich der das Bedienteil beweglich gelagert ist und

eine Anzeigevorrichtung mit einem Touchscreen. Die Relativbewegung zwischen Bedienteil und Basisplatte wird zur Erzeugung der Ansteuerdaten ausgewertet. Der Touchscreen in die Oberseite des Bedienteils integriert ist. Dies stellt eine besonders kompakte Ausführungsform dar.

Nach einem weiteren Aspekt der Erfindung ist ein 3D-Eingabegerät zur Übertragung von Ansteuerdaten zu elektronischen oder elektrischen Geräten vorgesehen, das die folgenden Komponenten aufweist:

- ein Bedienteil, das derart ausgebildet ist, dass es mittelbar oder unmittelbar durch wenigstens einen Finger oder mit einer Hand des Benutzers manipulierbar ist,
- eine Basisplatte, bezüglich der das Bedienteil beweglich gelagert ist und
- eine Anzeigevorrichtung mit einem Touchscreen, wobei der Touchscreen im Wesentlichen senkrecht zu der Längsachse des Bedienteils angeordnet ist. Die Relativbewegung zwischen Bedienteil und Basisplatte wird zur Erzeugung der Ansteuerdaten ausgewertet.

Somit fällt vorteilhafterweise die Blickrichtung auf den Touchscreen mit der Längsachse des Bedienteils zusammen, was eine vereinfachte Hand-Augen-Koordination erlaubt.

Das Gerät kann einen Prozessor aufweisen, der mit dem Touchscreen und dem Bedienteil funktionell gekoppelt ist, so dass mittels einer Eingabe auf dem Touchscreen Parameter des 3D-Eingabegeräts, wie beispielsweise Empfindlichkeit, Achsenbelegung, Funktionstastenbelegung etc. einstellbar sind.

Darüber hinaus können erfindungsgemäß durch manuelle Eingaben über den Touchscreen der Anzeigevorrichtung die Empfindlichkeit, die Ansprechschwellen und/oder die Ansprechdauer des 3D-Eingabegeräts für Bewegungen mit bis zu drei translatorischen und/oder drei rotatorischen Freiheitsgraden optional eingestellt werden.

Durch manuelle Eingaben über den Touchscreen der Anzeigevorrichtung kann ferner eine Zuweisung von optionalen technischen Funktionen zu den Freiheitsgraden des 3D-Eingabegeräts einstellbar sein.

Die Basisplatte kann zur Auflage auf eine Arbeitsunterlage dienen.

In einer speziellen Anwendung der vorliegenden Erfindung kann vorgesehen sein, dass das Gerät eine Schnittstelle zur drahtlosen Übertragung von Ansteuerdaten zu einem elektrisch betriebenen Gerät aufweist. Mit Hilfe dieser Schnittstelle wird ermöglicht, das Eingabegerät in der Art einer Fernbedienung zu verwenden.

KURZBESCHREIBUNG DER ZEICHNUNGEN

Weitere Eigenschaften, Merkmale, Vorteile und Zweckmäßigkeiten der zugrunde liegenden Erfindung resultieren aus den untergeordneten abhängigen Ansprüchen sowie aus der folgenden Beschreibung der bevorzugten Ausführungsbeispiele der Erfindung, welche in den folgenden Zeichnungen abgebildet sind. Hierin zeigen:

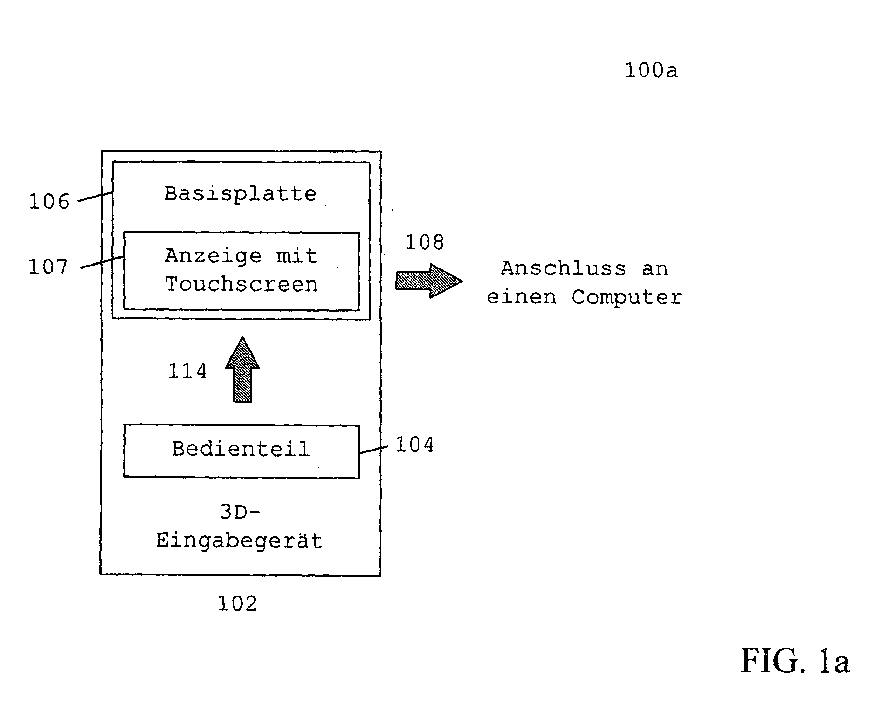

FIG. 1a    ein vereinfachtes Blockdiagramm 100a nach dem bevorzugten ersten Ausführungsbeispiel der zugrunde liegenden Erfindung, bei dem eine Anzeigevorrichtung mit Touchscreen 107 in die Oberseite der Basisplatte 106 integriert ist,

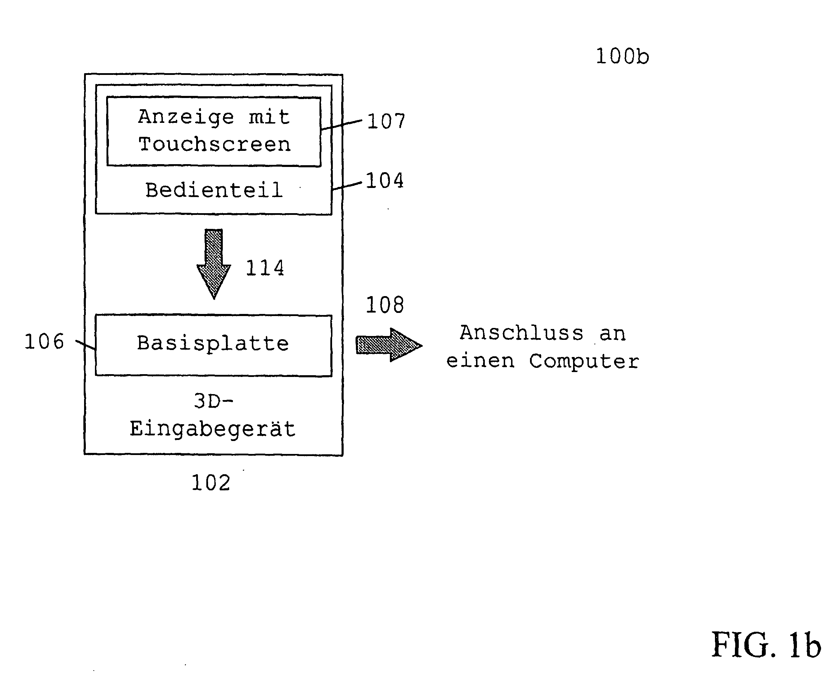

FIG. 1b    ein vereinfachtes Blockdiagramm 100b nach einem zweiten Ausführungsbeispiel der zugrunde liegenden Erfindung, bei dem eine Anzeigevorrichtung mit Touchscreen 107 in die Oberseite des Bedienteils 104 vom 3D-Eingabegerät 102 integriert ist,

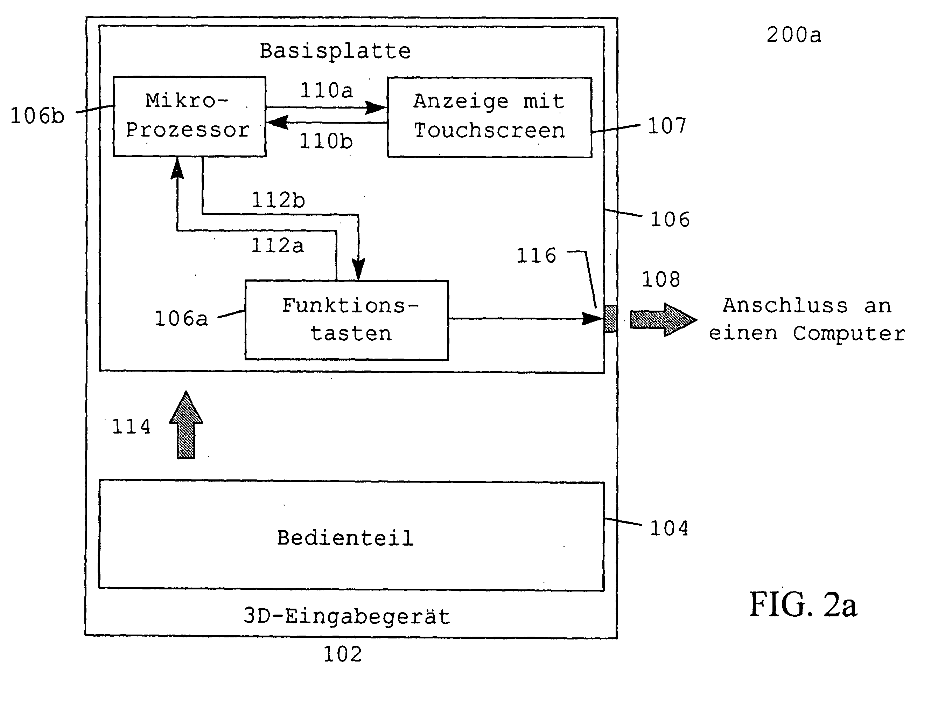

FIG. 2a    ein detailliertes Blockdiagramm 200a zur Veranschaulichung der Komponenten des 3D-Eingabegeräts 102 sowie der zwischen diesen Komponenten ausgetauschten Signale 110a+b und 112a+b nach dem bevorzugten ersten Ausführungsbeispiel der zugrunde liegenden Erfindung, bei dem eine Anzeigevorrichtung mit Touchscreen 107 in die Oberseite der Basisplatte 106 integriert ist,

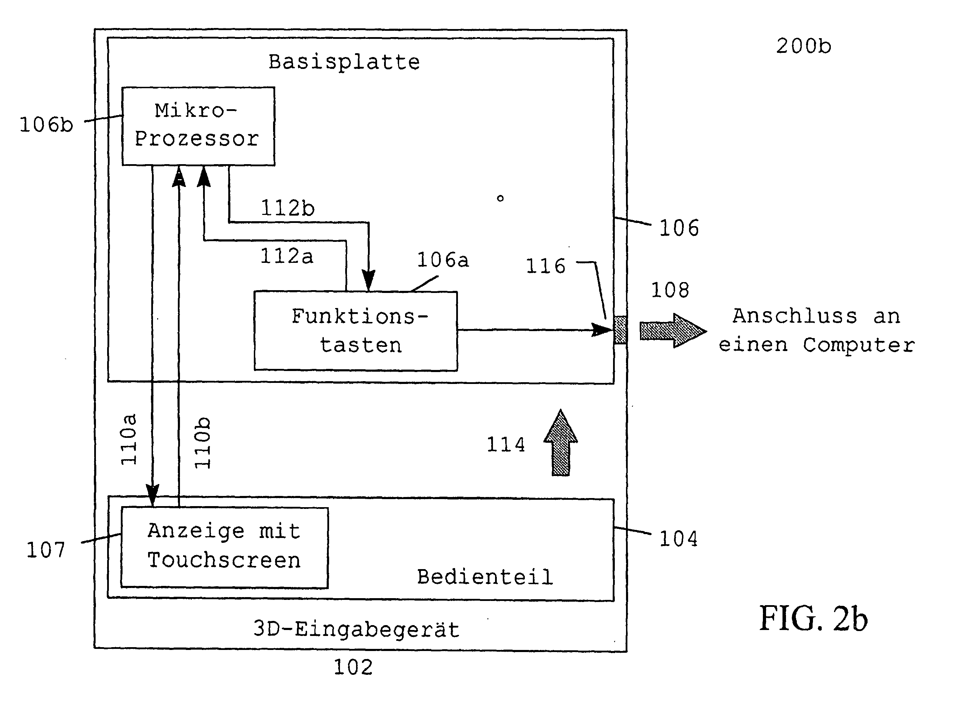

FIG. 2b    ein detailliertes Blockdiagramm 200b zur Veranschaulichung der Komponenten des 3D-Eingabegeräts 102 sowie der zwischen diesen Komponenten ausgetauschten Signale 110a+b und 112a+b nach dem zweiten Ausführungsbeispiel der zugrunde liegenden Erfindung, bei dem eine Anzeigevorrichtung mit Touchscreen 107 in die Oberseite des Bedienteils 104 vom 3D-Eingabegerät 102 integriert ist,

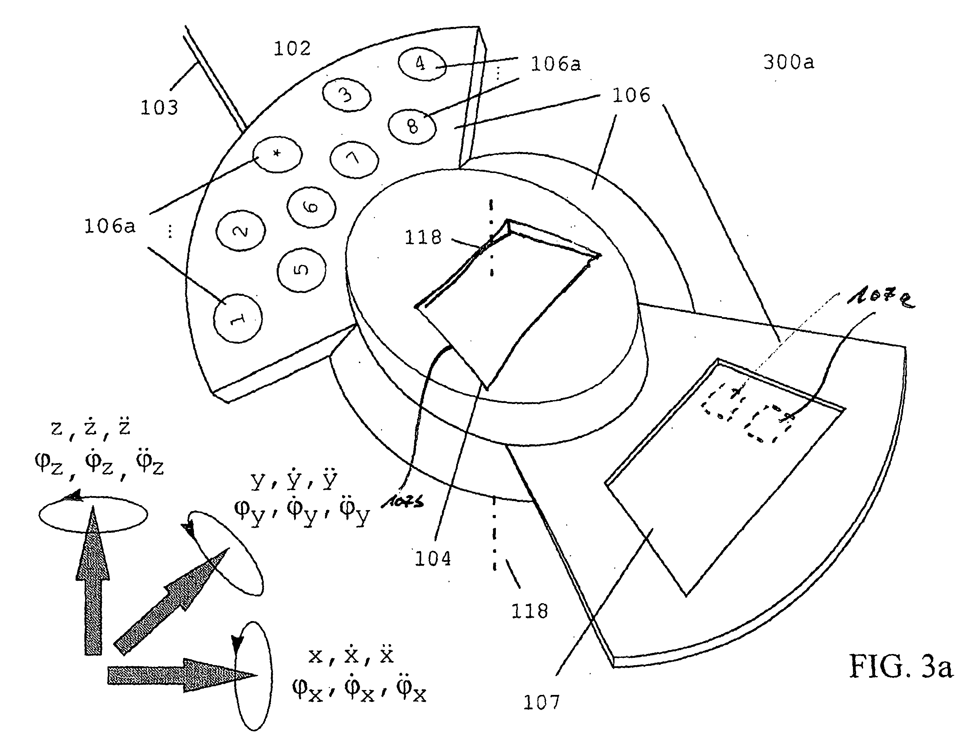

FIG. 3a    eine dreidimensionale Ansicht 300a des 3D-Eingabegeräts 102 nach dem bevorzugten ersten Ausführungsbeispiel der zugrunde liegenden Erfindung, bei dem eine Anzeigevorrichtung mit Touchscreen 107 in die Oberseite der Basisplatte 106 vom 3D-Eingabegerät 102 integriert ist, mit einem Koordinatensystem, in dem die sechs Freiheitsgrade x,y,z und $\varphi_x, \varphi_y, \varphi_z$ des 3D-Eingabegeräts und deren erste und zweite zeitliche

Ableitungen $\dot{x}$, $\dot{y}$, $\dot{z}$ und $\dot{\varphi}_x$, $\dot{\varphi}_y$, $\dot{\varphi}_z$ sowie $\ddot{x}$, $\ddot{y}$, $\ddot{z}$ und $\ddot{\varphi}_x$, $\ddot{\varphi}_y$, $\ddot{\varphi}_z$ eingezeichnet sind,

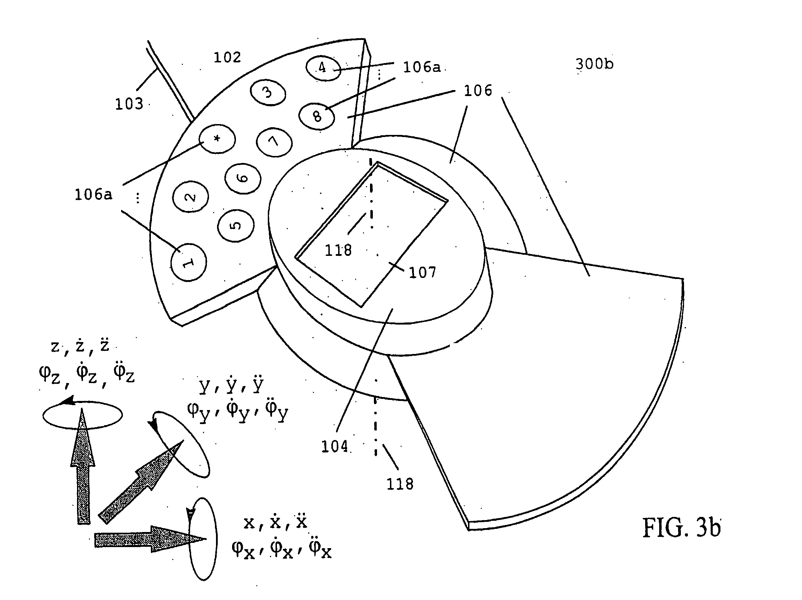

FIG. 3b     eine dreidimensionale Ansicht 300b des 3D-Eingabegeräts 102 nach dem zweiten Ausführungsbeispiel der zugrunde liegenden Erfindung, bei dem eine Anzeigevorrichtung mit Touchscreen 107 in die Oberseite des Bedienteils 104 vom 3D-Eingabegerät 102 integriert ist, mit einem Koordinatensystem, in dem die sechs Freiheitsgrade x,y,z und $\varphi_x$, $\varphi_y$, $\varphi_z$ des 3D-Eingabegeräts und deren erste und zweite zeitliche Ableitungen $\dot{x}$, $\dot{y}$, $\dot{z}$ und $\dot{\varphi}_x$, $\dot{\varphi}_y$, $\dot{\varphi}_z$ sowie $\ddot{x}$, $\ddot{y}$, $\ddot{z}$ und $\ddot{\varphi}_x$, $\ddot{\varphi}_y$, $\ddot{\varphi}_z$ eingezeichnet sind,

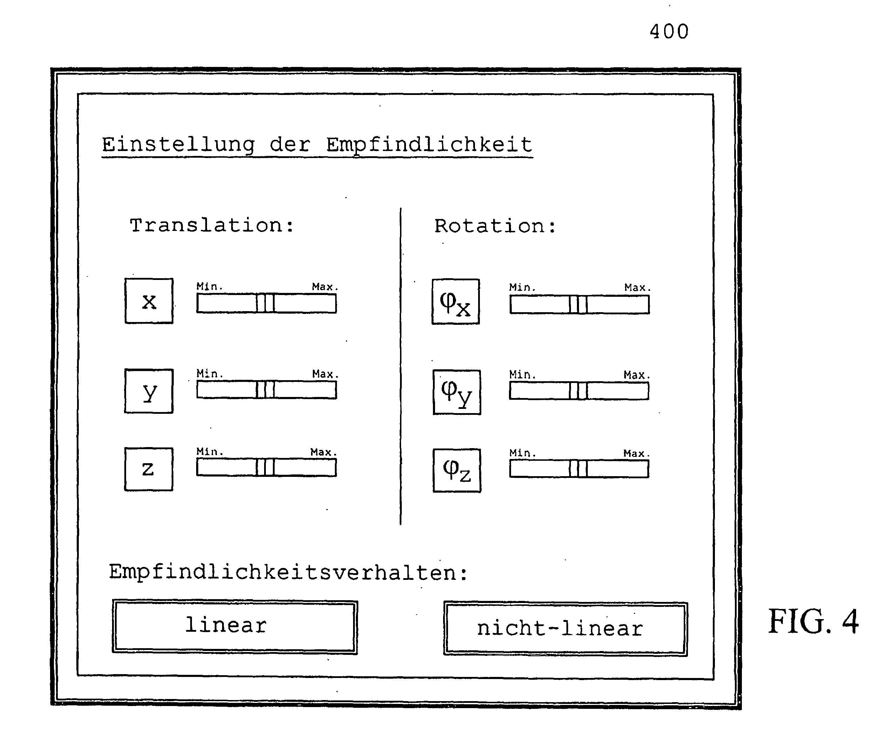

FIG. 4     ein Fenster 400 der Anzeigevorrichtung 107 mit integriertem Touchscreen zur Einstellung der Empfindlichkeitsstufen des 3D-Eingabegeräts 102 für Translationsbewegungen virtueller Objekte in x- ,y- bzw. z-Richtung sowie für Rotationsbewegungen virtueller Objekte in $\varphi_x$-, $\varphi_y$- bzw. $\varphi_z$-Richtung, wobei zwischen linearem und nicht-linearem Empfindlichkeitsverhalten unterschieden werden kann,

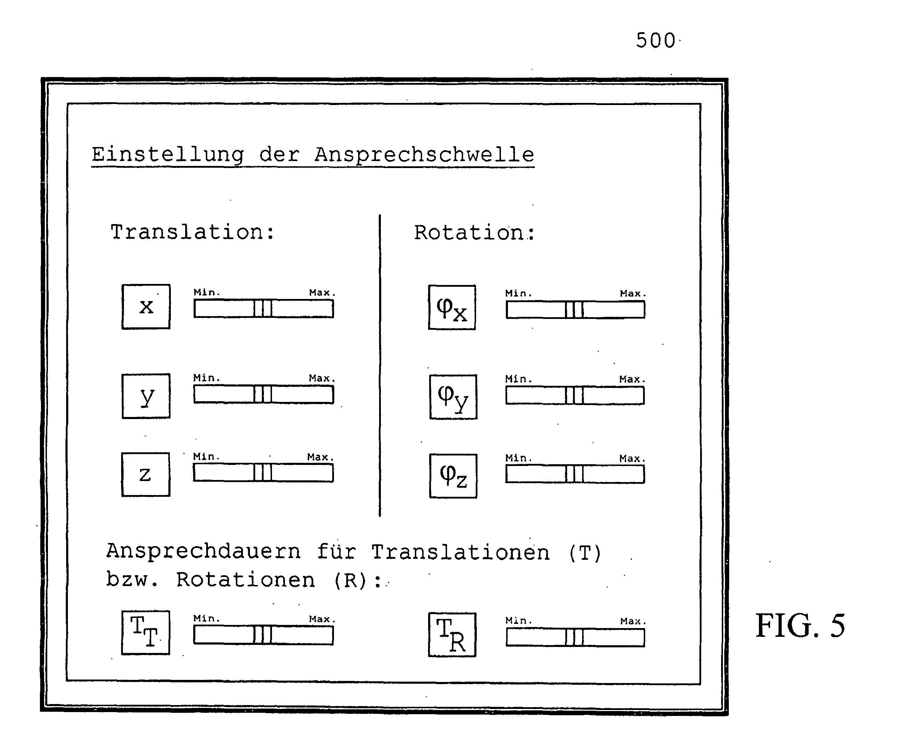

FIG. 5     ein Fenster 500 der Anzeigevorrichtung 107 mit integriertem Touchscreen zur Einstellung der Ansprechschwellen des 3D-Eingabegeräts 102 für Translationsbewegungen virtueller Objekte in x- ,y- bzw. z-Richtung, für Rotationsbewegungen virtueller Objekte in $\varphi_x$-, $\varphi_y$- bzw. $\varphi_z$-Richtung sowie zur Einstellung der Ansprechdauern des 3D-Eingabegeräts 102 für Translations- bzw. Rotationsbewegungen und

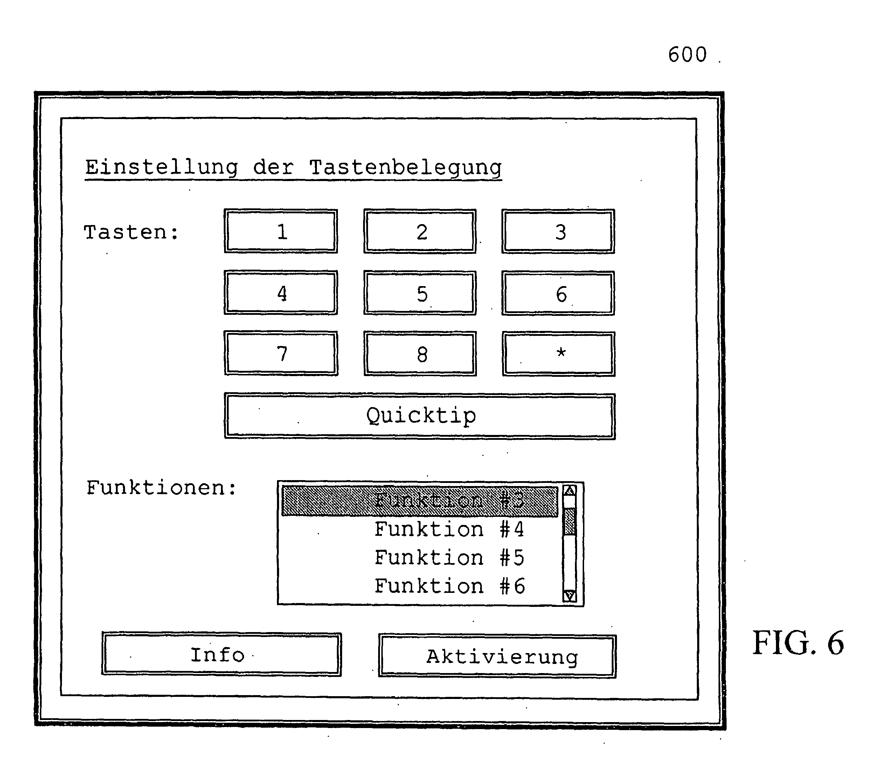

FIG. 6     ein Fenster 600 der Anzeigevorrichtung 107 mit integriertem Touchscreen zur Einstellung der Tastenbelegung für die neun Tasten des 3D-Eingabegeräts 102 und den Quicktip® Softkey mit Funktionen aus einem Auswahlfenster durch Betätigung einer Informations- und einer Aktivierungstaste.

## DETAILLIERTE BESCHREIBUNG DER ERFINDUNG

Im Folgenden werden die Funktionen der in dem bevorzugten Ausführungsbeispiel der vorliegenden Erfindung enthaltenen Baugruppen, wie in den Figuren 1a bis 6 abgebildet, näher beschrieben. Dabei soll zunächst der Aufbau und die mechanischen Bestandteile eines 3D-Eingabegeräts mit Touchscreen gemäß zwei Ausführungsbeispielen der vorliegenden Erfindung erläutert werden.
Das erfindungsgemäße 3D-Eingabegerät umfasst dabei die folgenden Komponenten:

- ein Bedienteil 104, das mittelbar (d.h. ohne direkten Zugriff) oder unmittelbar (direkter Zugriff) mit wenigstens einem Finger oder einer Hand des Benutzers manipuliert werden kann,

- eine Basisplatte 106, auf der das Bedienteil 104 in drei Achsen beweglich gelagert ist, um zu jedem Zeitpunkt t

$$\textbf{Kräfte } \vec{F}(t) := F_x(t) \cdot \vec{e}_x + F_y(t) \cdot \vec{e}_y + F_z(t) \cdot \vec{e}_z \ [N]$$

und

$$\textbf{Drehmomente } \vec{M}(t) := M_x(t) \cdot \vec{e}_x + M_y(t) \cdot \vec{e}_y + M_z(t) \cdot \vec{e}_z \ [Nm]$$

mit Komponenten $F_x(t)$, $F_y(t)$, $F_z(t)$, $M_x(t)$, $M_y(t)$ und $M_z(t)$ in Richtung der Einheitsvektoren $\vec{e}_x$, $\vec{e}_y$ und $\vec{e}_z$ eines dreidimensionalen Koordinatensystems mit den Achsen x, y und z aufzunehmen sowie

- Funktionstasten 106a, die vom Benutzer frei programmiert werden können.

Bewegungssignale des Benutzers mit bis zu drei translatorischen Freiheitsgraden x, y bzw. z und/oder bis zu drei rotatorischen Freiheitsgraden $\varphi_x$, $\varphi_y$ bzw. $\varphi_z$ werden dabei interpretiert als Ansteuersignale 114 vom Bedienteil 104 zur Basisplatte 106.
Figur 1a zeigt ein vereinfachtes Blockdiagramm 100a nach dem bevorzugten ersten Ausführungsbeispiel der zugrunde liegenden Erfindung, bei dem eine Anzeigevorrichtung mit Touchscreen 107 in die Oberseite der Basisplatte 106 integriert ist. Im Gegensatz dazu zeigt Figur 1b ein vereinfachtes Blockdiagramm 100b nach einem zweiten Ausführungsbeispiel der zugrunde liegenden Erfindung, bei dem eine Anzeigevorrichtung mit Touchscreen 107 in die Oberseite des Bedienteils 104 vom 3D-Eingabegerät 102 integriert ist. Mit Hilfe des Touchscreens kann eine Programmierung der Funktionstasten 106a ermöglicht werden.

Bezugnehmend auf die beiden Blockdiagramme 200a und 200b in den Figuren 2a bzw. 2b, sollen im Folgenden die Komponenten des 3D-Eingabegeräts 102 sowie die zwischen diesen Komponenten ausgetauschten Signale nach dem bevorzugten ersten und dem zweiten Ausführungsbeispiel der zugrunde liegenden Erfindung näher erläutert werden.

In Figur 2a ist ein detailliertes Blockdiagramm 200a zur Veranschaulichung der Komponenten des 3D-Eingabegeräts 102 sowie der zwischen diesen Komponenten ausgetauschten Signale 110a+b und 112a+b nach dem bevorzugten ersten Ausführungsbeispiel der zugrunde liegenden Erfindung dargestellt, bei dem eine Anzeigevorrichtung mit Touchscreen 107 in die Oberseite der Basisplatte 106 integriert ist.

Figur 2b zeigt ein detailliertes Blockdiagramm 200b zur Veranschaulichung der Komponenten des 3D-Eingabegeräts 102 sowie der zwischen diesen Komponenten ausgetauschten Signale 110a+b und 112a+b nach dem zweiten Ausführungsbeispiel der zugrunde liegenden Erfindung, bei dem eine Anzeigevorrichtung mit Touchscreen 107 in die Oberseite des Bedienteils 104 vom 3D-Eingabegerät 102 integriert ist.

Um eine Kommunikation zwischen dem Bedienteil 104 und der Basisplatte 106 zu ermöglichen, sind beide Komponenten über eine Eingabe-/Ausgabe-Schnittstefle zum Austausch von Ansteuersignalen 114 miteinander verbunden, die in den Figuren 2a und 2b nicht eingezeichnet ist. Das 3D-Eingabegerät 102 verfügt darüber hinaus über eine Schnittstelle 116 zu einem Computer. Über die Eingabevorrichtung mit Touchscreen 107 eingegebene Programmierungen werden als Programmiersignale 110b an einen Mikroprozessor 106b, der in der Basisplatte 106 integriert ist, geschickt und gelangen als Ansteuersignale 112b zum Programmiersignaleingang der Funktionstasten 106a. In umgekehrter Richtung werden Datensignale 112a vom Datensignalausgang der Funktionstasten 106a an den Mikroprozessor 106b geschickt, sofern Eingaben durch den Benutzer vorgenommen wurden. Sie gelangen als Datensignale 110a zum Signaleingang der Anzeigevorrichtung mit Touchscreen 107, um dort angezeigt bzw. graphisch visualisiert zu werden.

Bei entsprechender Ansteuerung durch den Benutzer ist dieses 3D-Eingabegerät 102 in der Lage, Ansteuersignale 108 für sechs voneinander unabhängige Freiheitsgrade zu erzeugen, Diese umfassen drei translatorische Freiheitsgrade, die im Folgenden als x, y und z bezeichnet werden, sowie drei rotatorische Freiheitsgrade, die im Folgenden als $\varphi_x$, $\varphi_y$ und $\varphi_z$ bezeichnet werden. Dabei kennzeichnen die Variablen x, y und z die orthogonalen Achsen eines dreidimensionalen kartesischen Koordinatensystems. Werden diese Variablen in Vektorschreibweise zusammengefasst, so ergeben sich zu jedem diskreten Zeitpunkt n (nach Weglassen der Einheiten):

$$\text{der Ortsvektor } \vec{x}(n) := [x(n), y(n), z(n)]^T \in \square^3$$

und

$$\text{der Drehrichtungsvektor } \vec{\varphi}(n) := [\varphi_x(n), \varphi_y(n), \varphi_z(n)]^T \in \square^3.$$

Selbstverständlich können z.B. mit Hilfe von Tastensteuerungen oder Schaltern verhältnismäßig einfach noch weitere Freiheitsgrade hinzugefügt werden. Dabei ist anzumerken, dass Schalter bzw. Tasten in der Regel binäre Ansteuersignale (Ein/Aus) erzeugen, wohingegen die oben genannten drei translatorischen Freiheitsgrade x, y bzw. z bzw. die drei rotatorischen Freiheitsgrade $\varphi_x$, $\varphi_y$ bzw. $\varphi_z$ jeweils analoge Ansteuersignale ergeben können, die dann beispielsweise bei byteweiser Kodierung in $2^8 = 256$ Stufen als digitale Signale zur weiteren Verarbeitung zur Verfügung stehen.

Da die drei translatorischen und die drei rotatorischen Freiheitsgrade x, y, z, $\varphi_x$, $\varphi_y$ bzw. $\varphi_z$ als "Analogsignale" bzw. in 256 Stufen quantisierte digitale Signale aufzufassen sind, kann gemäß der vorliegenden Erfindung auch die zeitliche Veränderung dieser Ansteuersignale 108 durch die weiter unten dann näher beschriebene frei spezifizierbare Echtzeit-Steuerung 102 für animierte Grafiken, Video- und/oder Audiosequenzen ausgewertet werden. Insbesondere ist es also möglich, zu jedem diskreten Zeitpunkt n (nach Weglassen der Einheiten) die dreidimensionalen Vektoren für

$$\text{die Geschwindigkeit } \vec{v}(n) := [\dot{x}(n), \dot{y}(n), \dot{z}(n)]^T \in \square^3,$$

$$\text{die Beschleunigung } \vec{a}(n) := [\ddot{x}(n), \ddot{y}(n), \ddot{z}(n)]^T \in \square^3,$$

$$\text{die Winkelgeschwindigkeit } \bar{\omega}(n) := [\dot{\varphi}_x(n), \dot{\varphi}_y(n), \dot{\varphi}_z(n)]^T \in \Box^3$$

sowie

$$\text{die Winkelbeschleunigung } \bar{\alpha}(n) := [\ddot{\varphi}_x(n), \ddot{\varphi}_y(n), \ddot{\varphi}_z(n)]^T \in \Box^3$$

der Freiheitsgrade x, y, z, $\varphi_x$, $\varphi_y$ bzw. $\varphi_z$ zu erfassen und gegebenenfalls als weitere Freiheitsgrade unabhängig von dem Absolutwert der jeweiligen Ansteuersignale 108 zu verwerten. Dabei sind seitens des Eingabegeräts 102 keine weiteren Sensoren (z.B. Geschwindigkeits- bzw. Beschleunigungssensoren) notwendig.

In Figur 3a ist eine dreidimensionale Ansicht 300a des 3D-Eingabegeräts 102 nach dem bevorzugten ersten Ausführungsbeispiel der zugrunde liegenden Erfindung mit einem 3D-Koordinatensystem abgebildet, in dem die sechs Freiheitsgrade

$$x, y, z \text{ [m] und } \varphi_x, \varphi_y, \varphi_z \text{ [rad]}$$

des 3D-Eingabegeräts 102 sowie deren erste und zweite zeitliche Ableitungen

$$\dot{x}, \dot{y}, \dot{z} \text{ [m·s}^{-1}\text{] und } \dot{\varphi}_x, \dot{\varphi}_y, \dot{\varphi}_z \text{ [rad·s}^{-1}\text{]}$$

sowie

$$\ddot{x}, \ddot{y}, \ddot{z} \text{ [m·s}^{-2}\text{] und } \ddot{\varphi}_x, \ddot{\varphi}_y, \ddot{\varphi}_z \text{ [rad·s}^{-2}\text{]}$$

eingezeichnet sind. Bei dem skizzierten 3D-Eingabegerät 102 handelt es sich um ein modifiziertes Modell der Space-Mouse® "Classic" der Firma LogiCad3D GmbH mit insgesamt neun frei programmierbaren Funktionstasten, bei dem erfindungsgemäß ein Touchscreen 107 in die Oberseite der Basisplatte 106 integriert ist.

In analoger Weise zeigt Figur 3b eine dreidimensionale Ansicht 300b des 3D-Eingabegeräts 102 nach dem zweiten Ausführungsbeispiel der zugrunde liegenden Erfindung mit einem 3D-Koordinatensystem, in dem die genannten sechs Freiheitsgrade des 3D-Eingabegeräts 102 sowie deren erste und zweite zeitliche Ableitungen eingezeichnet sind. Wieder handelt es sich bei dem skizzierten 3D-Eingabegerät 102 um ein modifiziertes Modell der Space-Mouse® "Classic" der Firma LogiCad3D GmbH mit insgesamt neun frei programmierbaren Funktionstasten, bei dem erfindungsgemäß ein Touchscreen 107 in die Oberseite des Bedienteils 104 integriert ist.

Durch manuelle Eingaben über den Touchscreen der Anzeigevorrichtung 107 ist es erfindungsgemäß möglich, die Empfindlichkeit des 3D-Eingabegeräts für Bewegungen mit bis zu drei translatorischen und/oder drei rotatorischen Freiheitsgraden in jeweils 600 Stufen individuell einzustellen. In gleicher Weise können mit Hilfe des Touchscreens der Anzeigevorrichtung 107 erfindungsgemäß auch die Ansprechschwellen sowie die Ansprechdauern des 3D-Eingabegeräts 102 für translatorische und/oder rotatorische Bewegungen virtueller Objekte individuell eingestellt werden.

Figur 4 zeigt ein Fenster 400 der Anzeigevorrichtung 107 mit integriertem Touchscreen zur Einstellung der Empfindlichkeit des 3D-Eingabegeräts 102 für Translationsbewegungen virtueller Objekte in x- ,y- bzw. z-Richtung sowie für Rotationsbewegungen virtueller Objekte in $\varphi_x$-, $\varphi_y$- bzw. $\varphi_z$-Richtung. Die Empfindlichkeit kann dabei durch ein Betätigen der entsprechenden Softkeys und Schieberegler verändert und an die Arbeitsweise des Benutzers individuell angepasst werden. Mit Hilfe zweier zusätzlicher Softkeys kann zwischen linearem und nicht-linearem Empfindlichkeitsverhalten unterschieden werden. Insgesamt stehen zur Einstellung der Empfindlichkeit 600 Empfindlichkeitsstufen zur Verfugung.

In Figur 5 ist ein Fenster 500 der Anzeigevorrichtung 107 mit integriertem Touchscreen zur Einstellung der Ansprechschwellen des 3D-Eingabegeräts 102 für Translationsbewegungen virtueller Objekte in x- ,y- bzw. z-Richtung sowie Rotationsbewegungen virtueller Objekte in $\varphi_x$-, $\varphi_y$- bzw. $\varphi_z$-Richtung skizziert. Die Ansprechschwellen können dabei durch ein Betätigen der entsprechenden Softkeys und Schieberegler verändert und an die Arbeitsweise des Benutzers individuell angepasst werden. Darüber hinaus sind in diesem Fenster zwei weitere Softkeys vorgesehen, mit deren Hilfe eine Einstellung der Ansprechdauern des 3D-Eingabegeräts 102 für Translations- bzw. Rotationsbewegungen virtueller Objekte individuell vorgenommen werden kann.

In Figur 6 ist ein Fenster 600 der Anzeigevorrichtung 107 mit integriertem Touchscreen zur Einstellung der Tastenbelegung für die neun Tasten des 3D-Eingabegeräts 102 und den Quicktip® Softkey abgebildet. Die Zuordnung von technischen Funktionen zu bestimmten Funktionstasten 106a des 3D-Eingabegeräts 102 kann dabei beispielsweise durch ein Betätigen der auf die Nummern der Funktionstasten 106a des 3D-Eingabegeräts 102 verweisenden Softkeys und eine Auswahl von Funktionen aus einem scrollbaren Menü erfolgen. Eine Zuordnung gilt dabei als programmiert, wenn die Aktivierungstaste betätigt wurde. Mit Hilfe der Inforrnationstaste kann der Benutzer nähere Informationen zu den Eigenschaften ausgewählter Funktionen bekommen, die auf Wunsch in einem weiteren Fenster der Anzeigevorrichtung 107 angezeigt werden.

Die Bedeutung der mit Bezugszeichen versehenen Symbole in den Figuren 1a a bis 6 kann der beigefügten Bezugszeichenliste entnommen werden.

Bezugszeichenliste

| Nr. | Symbol |
|---|---|
| 100a | vereinfachtes Blockdiagramm zur Veranschaulichung der zwischen dem 3D-Eingabegerät 102 und der Basisplatte 106 ausgetauschten Datensignale 110a bzw. Programmiersignale 110b nach dem bevorzugten ersten Ausführungsbeispiel der zugrunde liegenden Erfindung, bei dem eine Anzeigevorrichtung mit Touchscreen 107 in die Oberseite der Basisplatte 106 integriert ist |
| 100b | vereinfachtes Blockdiagramm zur Veranschaulichung der innerhalb des 3D-Eingabegeräts 102 zwischen dem Bedienteil 104 und der Anzeigevorrichtung mit Touchscreen 107 ausgetauschten Datensignale 110a bzw. Programmiersignale 110b nach einem zweiten Ausführungsbeispiel der zugrunde liegenden Erfindung, bei dem eine Anzeigevorrichtung mit Touchscreen 107 in die Oberseite des Bedienteils 104 vom 3D-Eingabegerät 102 integriert ist |
| 102 | 3D-Eingabegerät zur Eingabe der Ansteuersignale 108 |
| 103 | Kabelanschluss zu einem Computer |
| 104 | Bedienteil des 3D-Eingabegeräts 102 |
| 106 | Basisplatte des 3D-Eingabegeräts 102 |
| 106a | Funktionstasten der Basisplatte 106 |
| 106b | Mikroprozessor (μP), integriert in die Basisplatte 106 des 3D-Eingabegeräts 102 |
| 107 | Anzeigevorrichtung mit Touchscreen, integriert in die Basisplatte 106 oder das Bedienteil 104 des 3D-Eingabegeräts 102 |
| 108 | Ansteuersignale von der Basisplatte 106 des 3D-Eingabegeräts 102 zu einem angeschlossenen Computer |
| 110a | Datensignale vom Signalausgang des Mikroprozessors 106b zum Signaleingang der Anzeigevorrichtung mit Touchscreen 107 zur Steuerung der Anzeige |
| 110b | Programmiersignale vom Signalausgang der Anzeigevorrichtung mit Touchscreen 107 zum Signaleingang des Mikroprozessors 106b zur Programmierung der Funktionstasten 106a durch den Benutzer |

| Nr. | Symbol. |
|---|---|
| 112a | Datensignale vom Datensignalausgang der Funktionstasten 106a zum Signaleingang des Mikroprozessors 106b zur Steuerung von Funktionen durch den Benutzer |
| 112b | Ansteuersignale vom Signalausgang des Mikroprozessors 106b zum Programmiersignaleingang der Funktionstasten 106a zur Programmierung der Funktionstasten 106a |
| 114 | Bewegungssignale des Benutzers mit bis zu drei translatorischen Freiheitsgraden x,y,z [m] und/oder bis zu drei rotatorischen Freiheitsgraden $\varphi_x, \varphi_y, \varphi_z$ [rad], interpretiert als Ansteuersignale vom Bedienteil 104 zur Basisplatte 106 |
| 116 | Signalausgang des 3D-Eingabegeräts 102 für Ansteuersignale 108 vom 3D-Eingabegerät 102 zu einem Computer |
| 118 | (gedachte) vertikale Längsachse des Bedienteils 104 |
| 200a | detailliertes Blockdiagramm zur Veranschaulichung der Komponenten sowie der Ein- und Ausgabesignale des 3D-Eingabegeräts 102 und der Basisplatte 106 nach dem bevorzugten ersten Ausführungsbeispiel der zugrunde liegenden Erfindung, bei dem eine Anzeigevorrichtung mit Touchscreen 107 in die Oberseite der Basisplatte 106 integriert ist |
| 200b | detailliertes Blockdiagramm zur Veranschaulichung der Komponenten sowie der Ein- und Ausgabesignale des 3D-Eingabegeräts 102 und der Basisplatte 106 nach dem zweiten Ausführungsbeispiel der zugrunde liegenden Erfindung, bei dem eine Anzeigevorrichtung mit Touchscreen 107 in die Oberseite des Bedienteils 104 vom 3D-Eingabegerät 102 integriert ist |
| 300a | dreidimensionale Ansicht des 3D-Eingabegeräts 102 und der Basisplatte 106 mit einem 3D-Koordinatensystem, in dem die sechs Freiheitsgrade $$x,y,z \ [m] \ und \ \varphi_x, \varphi_y, \varphi_z \ [rad]$$ des 3D-Eingabegeräts 102 sowie deren erste und zweite zeitliche Ableitungen $$\dot{x}, \dot{y}, \dot{z} \ [m \cdot s^{-1}] \ und \ \dot{\varphi}_x, \dot{\varphi}_y, \dot{\varphi}_z \ [rad \cdot s^{-1}] \ sowie$$ |

| Nr. | Symbol |
|---|---|
| | $\ddot{x}, \ddot{y}, \ddot{z}$ [m·s$^{-2}$] und $\ddot{\varphi}_x, \ddot{\varphi}_y, \ddot{\varphi}_z$ [rad·s$^{-2}$]<br><br>eingezeichnet sind |
| 300b | dreidimensionale Ansicht des 3D-Eingabegeräts 102 nach dem zweiten Ausführungsbeispiel der zugrunde liegenden Erfindung, bei dem eine Anzeigevorrichtung mit Touchscreen 107 in die Oberseite des Bedienteils 104 vom 3D-Eingabegerät 102 integriert ist |
| 400 | Fenster der Anzeigevorrichtung 107 mit integriertem Touchscreen zur Einstellung der Empfindlichkeitsstufen des 3D-Eingabegeräts 102 für Translationsbewegungen virtueller Objekte in x- ,y- bzw. z-Richtung sowie für Rotationsbewegungen virtueller Objekte in $\varphi_x$-, $\varphi_y$- bzw. $\varphi_z$-Richtung, wobei zwischen linearem und nicht-linearem Empfindlichkeitsverhalten unterschieden werden kann |
| 500 | Fenster der Anzeigevorrichtung 107 mit integriertem Touchscreen zur Einstellung der Ansprechschwellen des 3D-Eingabegeräts 102 für Translationsbewegungen virtueller Objekte in x-, y- bzw. z-Richtung, für Rotationsbewegungen virtueller Objekte in $\varphi_x$-, $\varphi_y$- bzw. $\varphi_z$-Richtung sowie zur Einstellung der Ansprechdauern des 3D-Eingabegeräts 102 für Translations- bzw. Rotationsbewegungen |
| 600 | Fenster der Anzeigevorrichtung 107 mit integriertem Touchscreen zur Einstellung der Tastenbelegung für die neun Tasten des 3D-Eingabegeräts 102 und den Quicktip® Softkey mit Funktionen aus einem Auswahlfenster durch Betätigung einer Informations- und einer Aktivierungstaste |

**Patentansprüche**

1. 3D-Eingabegerät (102) zur Erzeugung von Ansteuerdaten (108) für elektronische oder elektrische Geräte, aufweisend:

   - ein Bedienteil (104), das derart ausgebildet ist, dass es mittelbar oder unmittelbar durch wenigstens einen Finger oder eine Hand des Benutzers manipulierbar ist,
   - eine Basisplatte (106), bezüglich der das Bedienteil (104) beweglich gelagert ist,

   wobei die Relativbewegung zwischen Bedienteil (104) und Basisplatte (106) zur Erzeugung der Ansteuerdaten ausgewertet wird,
   und

   - eine Anzeigevorrichtung mit einem Touchscreen (107),

**dadurch gekennzeichnet,**

**dass** der Touchscreen in die Oberseite der Basisplatte (106) integriert und im Wesentlichen senkrecht zu der Längsachse (118) des Bedienteils (104) angeordnet ist.

2. 3D-Eingabegerät (102) zur Erzeugung von Ansteuerdaten (108) für elektronische oder elektrische Geräte, aufweisend:

- ein Bedienteil (104), das derart ausgebildet ist, dass es mittelbar oder unmittelbar durch wenigstens einen Finger oder eine Hand des Benutzers manipulierbar ist,
- eine Basisplatte (106), bezüglich der das Bedienteil (104) beweglich gelagert ist,

  wobei die Relativbewegung zwischen Bedienteil (104) und Basisplatte (106) zur Erzeugung der Ansteuerdaten ausgewertet wird, und

- eine Anzeigevorrichtung mit einem Touchscreen (107),

**dadurch gekennzeichnet,**

**dass** der Touchscreen (107) der Anzeigevorrichtung im Wesentlichen senkrecht zu der Längsachse (118) des Bedienteils (104) angeordnet ist.

3. 3D-Eingabegerät nach einem der vorhergehenden Ansprüche,
**dadurch gekennzeichnet,**
**dass** die Basisplatte (106) zur Auflage auf eine Arbeitsunterlage dient.

4. Gerät nach einem der vorhergehenden Ansprüche,
**gekennzeichnet durch**
einen Prozessor, der mit dem Touchscreen der Anzeigevorrichtung (107) und dem Bedienteil (104) funktionell gekoppelt ist, so dass mittels einer Eingabe auf dem Touchscreen der Anzeigevonichtung (107) Parameter des 3D-Eingabegeräts (102) einstellbar sind.

5. Gerät nach Anspruch 4,
**dadurch gekennzeichnet,**
**dass** durch manuelle Eingaben über den Touchscreen der Anzeigevorrichtung (107) die Empfindlichkeit des 3D-Eingabegeräts (102) für Bewegungen mit bis zu drei translatorischen und/oder drei rotatorischen Freiheitsgraden einstellbar ist.

6. Gerät nach einem der Ansprüche 4 oder 5,
**dadurch gekennzeichnet,**
**dass** durch manuelle Eingaben über den Touchscreen der Anzeigevorrichtung (107) Ansprechschwellen des 3D-Eingabegeräts (102) für translatorische und/oder rotatorische Bewegungen virtueller Objekte einstellbar sind.

7. Gerät nach einem der Ansprüche 4 bis 6,
**dadurch gekennzeichnet,**
**dass** durch manuelle Eingaben über den Touchscreen der Anzeigevorrichtung (107) die Ansprechdauern des 3D-Eingabegeräts (102) für translatorische und/oder rotatorische Bewegungen virtueller Objekte individuell einstellbar sind.

8. Gerät nach einem der Ansprüche 3 bis 7,
**dadurch gekennzeichnet,**
**dass** durch manuelle Eingaben über den Touchscreen der Anzeigevorrichtung (107) eine Zuweisung von optionalen technischen Funktionen zu den Freiheitsgraden des 3D-Eingabegeräts (102) einstellbar ist.

9. Gerät nach einem der vorhergehenden Ansprüche,
**dadurch gekennzeichnet,**
**dass** es eine Schnittstelle zur drahtlosen Übertragung von Ansteuerdaten zu einem elektrischen oder elektronischen Gerät aufweist.

10. Gerät nach einem der vorhergehenden Ansprüche,

**dadurch gekennzeichnet,**

**dass** über das 3D-Eingabegerät (102) parametrisierte Ansteuersignale (108) von Bewegungen des 3D-Eingabegeräts (102) mit bis zu drei translatorischen und drei rotatorischen Freiheitsgraden eingegeben werden können.

**Claims**

1. 3D input device (102) for generating drive data (108) for electronic or electrical devices, having:

   - a control panel (104), which is developed in such a way that it can be manipulated indirectly or directly with at least one finger or one hand by the user,
   - a base plate (106), in relation to which the control panel (104) is movably positioned, the relative movement between the control panel (104) and the base plate (106) being evaluated to generate the drive data, and
   - a display device with a touch screen (107), **characterized in that**

   the touch screen is integrated in the upper side of the base plate (106) and is essentially arranged perpendicular to the longitudinal axis (118) of the control panel (104).

2. 3D input device (102) for generating drive data (108) for electronic or electrical devices, having:

   - a control panel (104), which is developed in such a way that it can be manipulated indirectly or directly with at least one finger or one hand by the user,
   - a base plate (106), in relation to which the control panel (104) is movably positioned, the relative movement between the control panel (104) and the base plate (106) being evaluated to generate the drive data, and
   - a display device with a touch screen (107),

     **characterized in that**
     the touch screen (107)of the display device is essentially arranged perpendicular to the longitudinal axis (118) of the control panel (104).

3. 3D input device according to one of the preceding claims, **characterized in that** the base plate (106) serves for positioning on a work surface.

4. Device according to one of the preceding claims, **characterized by** a processor, which is functionally linked to the touch screen of the display device (107) and to the control panel (104), so that parameters of the 3D input device (102) can be adjusted by means of input on the touch screen of the display device (107).

5. Device according to Claim 4, **characterized in that** the sensitivity of the 3D input device (102) can be set by manual inputs via the touch screen of the display device (107), for movements with up to three linear and/or three rotational degrees of freedom.

6. Device according to one of Claims 4 or 5, **characterized in that** operating thresholds of the 3D input device (102) for linear and/or rotational movements of virtual objects can be set by manual inputs via the touch screen of the display device (107).

7. Device according to one of Claims 4 to 6, **characterized in that** the response durations of the 3D input device (102) for linear and/or rotational movements of virtual objects can be individually set by manual inputs via the touch screen of the display device (107).

8. Device according to one of Claims 3 to 7, **characterized in that** an assignment of optional technical functions to the degrees of freedom of the 3D input device (102) is adjustable by manual inputs via the touch screen of the display device (107).

9. Device according to one of the preceding claims, **characterized in that** it has an interface for wireless transfer of drive data to an electrical or electronic device.

10. Device according to one of the preceding claims, **characterized in that**

parameterized drive signals (108) from movements of the 3D input device (102) with up to three linear and/or three rotational degrees of freedom can be input via the 3D input device (102).

**Revendications**

1. Appareil d'entrée en 3D (102) destiné à générer des données de commande (108) pour appareils électriques ou électroniques, comportant :

   - un organe de commande (104) qui est conformé de façon à pouvoir être manipulé directement ou indirectement avec au moins un doigt ou une main de l'utilisateur,
   - une plaque de base (106), par rapport auquel l'organe de commande (104) est monté de façon mobile, le mouvement relatif entre l'organe de commande (104) et la plaque de base (106) étant exploité pour générer les données de commande, et
   - un dispositif d'affichage doté d'un écran interactif (107),

   **caractérisé en ce que** l'écran interactif est intégré dans la partie supérieure de la plaque de base (106) et est disposé sensiblement perpendiculairement à l'axe longitudinal (118) de l'organe de commande (104).

2. Appareil d'entrée en 3D (102) destiné à générer des données de commande (108) pour appareils électriques ou électroniques, comportant :

   - un organe de commande (104) qui est conformé de façon à pouvoir être manipulé directement ou indirectement avec au moins un doigt ou une main de l'utilisateur,
   - une plaque de base (106), par rapport auquel l'organe de commande (104) est monté de façon mobile, le mouvement relatif entre l'organe de commande (104) et la plaque de base (106) étant exploité pour générer les données de commande, et
   - un dispositif d'affichage doté d'un écran interactif (107),

   **caractérisé en ce que** l'écran interactif (107) du dispositif d'affichage est disposé sensiblement perpendiculairement à l'axe longitudinal (118) de l'organe de commande (104).

3. Appareil d'entrée en 3D selon l'une des revendications précédentes, **caractérisé en ce que** la plaque de base (106) est destinée à reposer sur une base de travail.

4. Appareil selon l'une des revendications précédentes, **caractérisé par** un processeur qui est fonctionnellement couplé à l'écran interactif du dispositif d'affichage (107) et à l'organe de commande (104) de façon à permettre le réglage des paramètres de l'appareil d'entrée en 3D (102) au moyen d'une entrée sur l'écran interactif du dispositif d'affichage (107).

5. Appareil selon la revendication 4, **caractérisé en ce que** la sensibilité de l'appareil d'entrée en 3D (102) pour des mouvements ayant jusqu'à trois degrés de liberté en translation et/ou trois degrés de liberté en rotation peut être réglée par des entrées manuelles sur l'écran interactif du dispositif d'affichage (107).

6. Appareil selon l'une des revendications 4 ou 5, **caractérisé en ce que** des seuils de réponse de l'appareil d'entrée en 3D (102) pour des mouvements en translation et/ou en rotation d'objets virtuels sont réglables par des entrées manuelles sur l'écran interactif du dispositif d'affichage (107).

7. Appareil selon l'une des revendications 4 à 6, **caractérisé en ce que** les durées de réponse de l'appareil d'entrée en 3D (102) pour des mouvements en translation et/ou en rotation d'objets virtuels sont réglables individuellement par des entrées manuelles sur l'écran interactif du dispositif d'affichage (107).

8. Appareil selon l'une des revendications 3 à 7, **caractérisé en ce qu'**une affectation de fonctions techniques optionnelles aux degrés de liberté de l'appareil d'entrée en 3D (102) est réglable par des entrées manuelles sur l'écran interactif du dispositif d'affichage (107).

9. Appareil selon l'une des revendications précédentes, **caractérisé en ce qu'**il comporte une interface pour la transmission sans fil de données de commande à un appareil électrique ou électronique.

10. Appareil selon l'une des revendications précédentes, **caractérisé en ce que** des signaux de commande paramétrés (108) de mouvements de l'appareil d'entrée en 3D (102) ayant jusqu'à trois degrés de liberté en translation et/ou trois degrés de liberté en rotation peuvent être entrés par l'appareil d'entrée en 3D (102).

EP 1 428 110 B1

100a

Basisplatte
106

Anzeige mit
Touchscreen
107

108

Anschluss an
einen Computer

114

Bedienteil
104

3D-
Eingabegerät

102

FIG. 1a

100b

Anzeige mit
Touchscreen — 107

Bedienteil — 104

114

108

106 — Basisplatte → Anschluss an
einen Computer

3D-
Eingabegerät

102

FIG. 1b

EP 1 428 110 B1

FIG. 2a

200b

Basisplatte

106b — Mikro-Prozessor

112b

112a

106a

106

116

108

Funktions-tasten

Anschluss an einen Computer

110a

110b

114

107 — Anzeige mit Touchscreen

104

Bedienteil

3D-Eingabegerät

102

FIG. 2b

EP 1 428 110 B1

FIG. 3a

FIG. 3b

$$z, \dot{z}, \ddot{z}$$
$$\varphi_z, \dot{\varphi}_z, \ddot{\varphi}_z$$

$$y, \dot{y}, \ddot{y}$$
$$\varphi_y, \dot{\varphi}_y, \ddot{\varphi}_y$$

$$x, \dot{x}, \ddot{x}$$
$$\varphi_x, \dot{\varphi}_x, \ddot{\varphi}_x$$

400

Einstellung der Empfindlichkeit

Translation:

x    Min. |——||—— Max.

y    Min. |——||—— Max.

z    Min. |——||—— Max.

Rotation:

$\varphi_x$    Min. |——||—— Max.

$\varphi_y$    Min. |——||—— Max.

$\varphi_z$    Min. |——||—— Max.

Empfindlichkeitsverhalten:

| linear | nicht-linear |

FIG. 4

EP 1 428 110 B1

EP 1 428 110 B1

FIG. 5

EP 1 428 110 B1

Einstellung der Tastenbelegung

Tasten:

| 1 | 2 | 3 |
| 4 | 5 | 6 |
| 7 | 8 | * |

Quicktip

Funktionen:

Funktion #3
Funktion #4
Funktion #5
Funktion #6

Info    Aktivierung

FIG. 6